# EUROPEAN PATENT SPECIFICATION

(11) **EP 3 108 609 B1**
(45) Date of publication and mention of the grant of the patent: **24.06.2020**
(21) Application number: 15708971.5
(22) Date of filing: 18.02.2015
(51) Int. Cl.: H04L 9/08, H04L 9/32, G06F 21/57, G06F 21/71, G06F 21/76

(54) **AUTHENTICATION USING PUBLIC KEYS AND SESSION KEYS**
AUTHENTIFIZIERUNG MITTELS ÖFFENTLICHER SCHLÜSSEL UND SITZUNGSSCHLÜSSEL
AUTHENTIFICATION À L'AIDE DE CLÉS PUBLIQUES ET DE CLÉS DE SESSION

(30) Priority: 20.02.2014 US 201414185780
(43) Date of publication of application: 28.12.2016
(73) Proprietor: Xilinx, Inc., San Jose, California 95124 (US)
(72) Inventor: MOORE, Jason, J., San Jose, CA 95124 (US); MCNEIL, Steven, E., San Jose, CA 95124 (US); TRIMBERGER, Stephen, M., San Jose, CA 95124 (US)
(74) Representative: McGlashan, Graham Stewart
(86) International application number: PCT/US2015/016417
(87) International publication number: WO 2015/126967

(56) References cited:
- WO-A1-2012/056094
- GB-A- 2 355 819
- US-A1- 2004 107 349

## Description

### FIELD OF THE INVENTION

The disclosure generally relates to authenticating data.

### BACKGROUND

Authentication is generally a process by which a receiver of data determines whether or not the received data came from a trusted source. The data to be authenticated may be executable programs, configuration data for programmable logic, email messages, or application program data, for example.

One approach for authentication relies on public-private key pairs. Data is signed by the sender with the senders' private key of a key pair, resulting in a signature for that data. A receiver may use the sender's public key of the key pair and the received data to determine whether the signature sent with the data is that of the sender. If the signature is as expected for the received data, the received data is authenticated. Otherwise, the received data may have been sent from an unreliable source or may have been tampered with.

The public keys employed by a receiving device to authenticate input data are typically stored in a non-volatile memory of the device. Some implementations provide the capability to revoke a public key. Revoking a public key invalidates the key for subsequent use. In most cases a new public key may be established when a current public key is revoked.

Flash memory is often used to store public keys since it is non-volatile and can be reprogrammed. However, for some applications flash memory may be unsuitable. For example, field programmable gate arrays (FPGAs) are made using SRAM technology. Combining flash memory into an SRAM based device may be technically challenging and cost prohibitive. Therefore, e-fuses are sometimes used for storage of public keys. However, e-fuses occupy a large area relative to the small amount of information represented by the states of the e-fuses. Therefore, it would be desirable to have a cost-effective system for storage and revocation of public keys.

Prior art solutions are disclosed in documents: WO 2012/056094 A1, GB 2 355 819 A and US 2004/0107349 A1.

### SUMMARY

The objects of the present invention are achieved by means of the appended set of claims. A method of authenticating data is disclosed. The method includes storing a plurality of combinations of representations of public keys and session key identifiers (IDs) in a non-volatile memory. A payload and accompanying public key, session key ID, and signature of the payload are input. The signature is a function of the payload and a private key of a key pair that includes the accompanying public key and the private key. The method determines whether or not the payload is authentic, from the accompanying public key and session key ID and the combinations stored in the non-volatile memory, and from the signature and the payload. In response to determining that the payload is authentic, the payload is processed. In response to determining that the payload is not authentic, processing of the payload is disabled.

An authentication system is also described. The system includes non-volatile storage and a processor. The non-volatile storage is configurable for storage of a plurality of combinations of representations of public keys and session key IDs. The processor is coupled to the non-volatile storage and is configured to input a payload and accompanying public key, session key ID, and signature of the payload. The signature is a function of the payload and a private key of a key pair that includes the accompanying public key and the private key. The processor is further configured to determine whether or not the payload is authentic, from the accompanying public key and session key ID and the combinations stored in the non-volatile memory, and from the signature and the payload. Responsive to determining that the payload is authentic, the processor processes the payload. Responsive to determining that the payload is not authentic, the processor disables processing of the payload.

Other features will be recognized from consideration of the Detailed Description and Claims, which follow.

### BRIEF DESCRIPTION OF THE DRAWINGS

Various aspects and features of the methods and systems will become apparent upon review of the following detailed description and upon reference to the drawings in which:
FIG. 1 is a flow diagram that shows the construction of authentication information for a payload, and the authentication of the payload for purposes of enabling revocation of authentication keys;
FIG. 2 is a block diagram that shows a system in which authentication keys are used to control the booting and/or configuration of the system;
FIG. 3 is a flowchart of a process for initially configuring the authentication system;
FIG. 4 is a flowchart of a process of authenticating an input payload using a public key and a session key ID;
FIG. 5 is a flowchart of a process of revoking a public key or a session key ID; and
FIG. 6 is an example SOC architecture on which a system may be implemented using the various approaches described herein.

### DETAILED DESCRIPTION OF THE DRAWINGS

The systems and methods provide an approach for securely managing authentication keys while also increasing the number of keys that may be used in the life of a device. The systems and methods use public keys, session key identifier (IDs), and a payload signature to authenticate a payload. Revocation of a public key or a session key associated with a session key ID is permitted only after the system has booted with configuration data or program code that has been authenticated. Revoking a key may also be referred to as invalidating a key.

In one implementation, the session key is a public key that can be used for authenticating software or hardware loads following the boot or initial configuration of the device. Another public key (or root key) and a session key ID, which are stored on the device, may be used in authenticating the initial boot program or hardware configuration and the accompanying session key. After the device has been configured or booted, subsequently loaded software or hardware configurations can be authenticated using the session key. This minimizes the use of the root key. As will be apparent from the disclosure below, the approach for revoking session key provides flexibility in managing the use of the session keys.

The system has non-volatile storage for multiple combinations of representations of public keys and session key IDs. The representations may be the binary format of the values of the actual public keys and session key IDs or may be binary formats of hash values of the public keys and session key IDs. For ease of explanation, public key and session key ID may be used when referring to the representations thereof.

A payload input to the system is accompanied by a public key, a session key ID, and a signature of the payload. The signature is a function of the payload and a private key of a key pair that includes the accompanying public key and the private key. The system includes a processor which determines whether or not the payload is authentic. The authenticity of the payload is determined based not only on the signature of the payload, but also on the accompanying public key and session key ID and the combinations of representations of public and session key IDs stored in the non-volatile memory.

If the payload is authentic, the processor allows the payload to be processed. If the payload is not authentic, the processor disables further processing of the payload. In an example application, the processing of the payload may entail booting the system with program code contained in the payload or configuring programmable logic such as may be found in a system-on-a-chip (SOC).

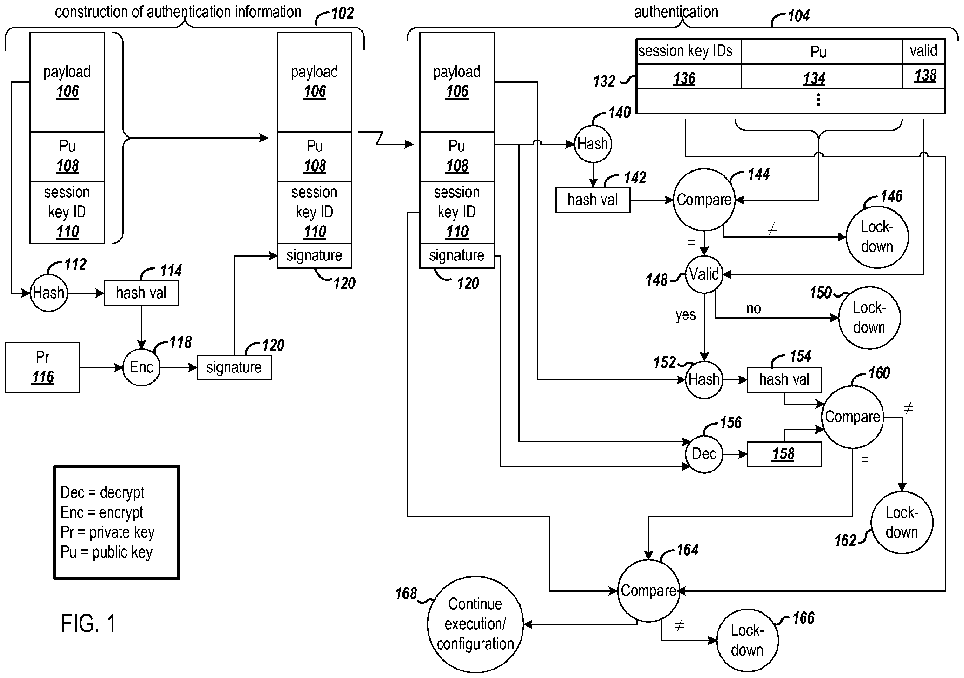

FIG. 1 is a flow diagram that shows the construction of authentication information for a payload, and the authentication of the payload for purposes of enabling revocation of authentication keys. In an example application, the payload may be a boot program for a processor or configuration data for programmable logic, for example. The flow diagram shows two general phases, the construction of the authentication information and the authentication of the payload using the authentication information. The construction of the authentication information is marked with brace 102, and the authentication is marked with brace 104.

The payload 106 to be provided to a system has an accompanying public key Pu 108 and session key ID 110. The payload may include the session key corresponding to session key ID 110. The payload is input to a hash function 112, which computes a hash value 114 based on the payload. In an alternative implementation, both the public key 108 and the session key ID 110 may be input to the hash function. In an example implementation the hash function may be an SHA-based function. The hash value 114 is encrypted with the private key Pr 116 by encryption function 118, resulting in signature 120. The signature 120 is appended to the information that accompanies the payload 106. The payload 106, public key 108, session key ID 110, and signature 120 may be formatted into a configuration file to be used in a secure boot of a system in an example application.

The authentication of the payload is performed by the system that inputs the payload 106 and accompanying public key 108, session key ID 110, and signature 120. The system includes a non-volatile memory 132 for storage of representations of the public keys 134 and session key IDs 136. In one implementation, hash values of the public keys are stored in order to reduce storage requirements. For example, the result produced from a hash function applied to a 2048-bit public key may be 256 bits. In another implementation, the public keys are not hashed. The non-volatile memory also includes storage for key states of the public keys. The key state for each public key may be indicated by a valid bit 138 that is associated with that public key. The public keys 134, session key IDs 136, and valid bits 138 may be stored in e-fuses, for example.

In an implementation in which the non-volatile memory stores hash values of public keys, the public key 108 that accompanies the input payload 106 is input to a hash function 140 to produce hash value 142. Compare function 144 compares the hash value 142 to the hash values of the public keys 134 in the non-volatile memory. In response to the hash value 142 not matching any of the hashed public keys 134, the compare function designates the payload to be not authentic, and the system disables further processing of the payload 106 with lock-down function 146. For example, the processor may lockdown the system by aborting booting of the system or aborting configuring programmable logic. The designation may be by way of the state of a signal or value stored in a register or memory.

In another implementation, each combination of one of session key IDs 136 and public keys 134 may be a single hash value. In this implementation, both the public key 108 and session key ID 110 that accompany the payload 106 are input to the hash function 140, and the compare function 144 compares the resulting hash value to the combined value of a hashed public key and session key ID in the non-volatile memory.

If the compare function 144 finds a match, the valid function 148 determines whether or not the valid bit associated with the matching hashed public key (or alternatively, matching combination of hashed public key and session key ID, or matching non-hashed public key), has a key state that indicates that the key(s) is valid. If the key state indicates that the matching key is not valid, the valid function 148 designates the payload to be not authentic, and the system disables further processing of the payload 106 with lock-down function 150, such as by aborting booting of the system or aborting configuring programmable logic.

In response to the valid bit having a key state that indicates that the key(s) is valid, the signature of the payload 106 is confirmed by inputting the payload 106 to hash function 152, which would be the same as hash function 112, and generating hash value 154. The signature 120 and public key 108 that accompany the payload 106 are input to decryption function 156, which decrypts the signature using the public key, resulting in decrypted signature 158. The compare function 160 compares the computed hash value to the decrypted signature. In response to the signature failing to match, the system disables further processing of the payload 106 with lock-down function 162, such as by aborting booting of the system or aborting configuring programmable logic.

In response to the decrypted signature matching the hash value, the compare function 164 compares the session key ID 110 that accompanies the input payload to the session key ID in the non-volatile memory 132 that is associated with the matching one of the hashed public keys 134. In response to the session key ID 120 not matching the one of the session key IDs 136, the compare function 164 designates the payload to be not authentic, and the system disables further processing of the payload 106 with lock-down function 166, such as by aborting booting of the system or aborting configuring programmable logic. In response to the session key ID 120 matching the one of the session key IDs 136, the system enables processing of the payload 106, such as by continuing with execution of a boot program and/or configuration of programmable logic 168. In the implementation in which each combination of one of session key IDs 136 and one of public keys 134 is a single hash value, the compare function 164 is not required, and a positive comparison found by compare function 160 continues with processing function 168, such as execution of a boot program and/or configuration of programmable logic 168.

A session key may be revoked independent of the associated public key. In an example implementation, each of session key IDs 136 is stored in a set of e-fuses. To revoke a session key, current flow is disabled through the one of the e-fuses of the session key ID. The blown fuse changes the value of the session key ID, which effectively revokes the previous session key ID stored in the set of fuses. In an example implementation, the session key IDs are thereby stored in unary format.

Revoking a public key revokes not only the public key but also effectively revokes the associated session key. As explained above, the non-volatile memory 132 includes valid bits for storage of key states that are associated with the combinations of public keys 134 and session key IDs 136. Each combination includes a one of the public keys and one of the session key IDs. The key state in the valid bit associated with a combination indicates whether or not the associated combination is valid (has not been revoked). The valid bits may be implemented as e-fuses.

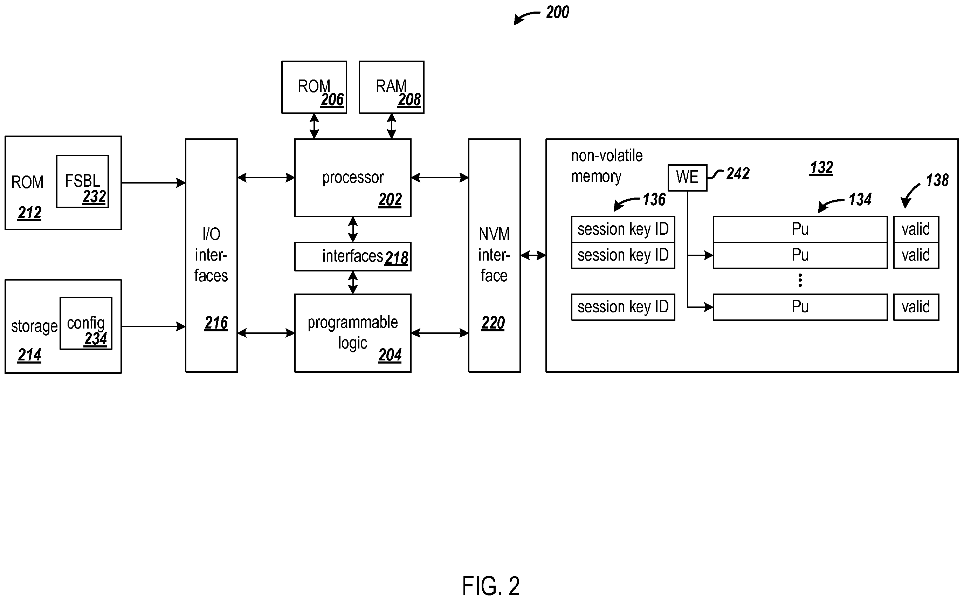

FIG. 2 is a block diagram that shows a system 200 in which authentication keys are used to control the booting and/or configuration of the system. The system 200 includes a processor 202, programmable logic 204, ROM 206, RAM 208, non-volatile memory 132, ROM 212, storage 214, and interfaces 216, 218, and 220. The processor 202, programmable logic 204, ROM 206, RAM 208, non-volatile memory 132, and interfaces 216, 218, and 220 may be implemented as a system-on-a-chip (SOC). A combination of one of the public keys 134 and one of the session key IDs 136 is used by the processor to authenticate the first stage boot loader (FSBL) 232 and/or configuration bitstream 234. Once authenticated, the processor in executing FSBL code or the programmable logic as configured with the configuration bitstream, is enabled to revoke one of the public keys and/or session key IDs.

In booting the system, the processor 202 loads and executes program code from ROM 206. That code causes the processor to input the FSBL 232 and/or configuration bitstream 234 into RAM 208 and then authenticate the FSBL or bitstream. The FSBL and configuration bitstream input to the processor have an accompanying public key, session key ID, and signature. If the processor determines the input FSBL or bitstream to be authentic as described above, the processor may continue by processing the payload, that is by executing program code of the FSBL or configuring the programmable logic 204 with the configuration bitstream.

The non-volatile memory 132 is comprised of e-fuses in an example implementation. A public key is established by blowing selected e-fuses to establish a binary value of the public key or a hash of the public key. The session key ID associated with a public key is also established by blowing one or more e-fuses to represent the value of the session key ID. A new session key may be established for use in combination with the associated public key by blowing another e-fuse of the e-fuses for that session key ID. The session key ID is thereby embodied in a unary format in the e-fuses. For example, if 32 e-fuses are used to represent a session key ID, then the session key ID can have 32 different values.

The valid bits 138 associated with the combinations of public keys and session key IDs are also implemented with e-fuses. When the e-fuse of a valid bit is blown, the public key is invalidated, and because the session key ID associated with the public key is only used with that public key, the session key associated with that session key ID is also effectively invalidated. The e-fuses of the valid bits 138 and session key IDs 136 may be blown by program code executing on the processor 202 or by circuitry configured in the programmable logic 204 only after the program code or configuration bitstream has been authenticated.

In one implementation, a write-enable (WE) e-fuse 242 controls all but the first public key. This allows the processor running unauthenticated program code or programmable logic configured with an unauthenticated configuration bitstream to program the first public key. The very first programming of the public key space is allowed to be done without authentication because there is no key in the non-volatile memory 132 with which to authenticate. After the first public key has been configured, subsequent programming or revocation of keys is permitted only after the program code or configuration bitstream has been authenticated.

The public keys other than the first public key may be controlled by the WE e-fuse 242. The e-fuse of the WE bit can be blown once all desired values of the public keys are programmed. In another implementation, individual WE bits may be used to individually control programming of the public keys.

The system protects against unauthorized programming of the public keys. An authorized party, at the initial programming of the public keys, may configure values for all the public keys 134 in the e-fuses. The WE e-fuse 242 can then be blown to disable any further configuration of the public keys. In an alternative approach, the authorized party, at the initial programming may configure the value for only the public key that is not protected by the WE e-fuse (the first public key). Thereafter, before any other public key can be configured or revoked, any input program code or configuration bitstream must first be authenticated with a valid public key and session key.

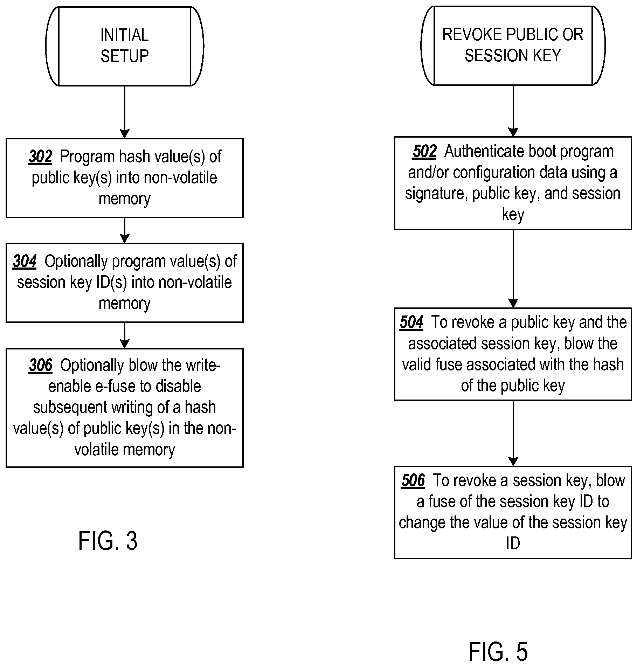

FIG. 3 is a flowchart of a process for initially configuring the authentication system. At block 302, the representations of one or more public keys are configured in the non-volatile memory. The representation of each public key may be the actual value of the public key or a hash value of the public key, depending on implementation requirements.

In one implementation, all the public keys are configured in the non-volatile memory at the initial setup. Alternatively, only the first public key is configured, and thereafter, conditioned on authentication of program code or a configuration bitstream, other public keys can be configured by a program running on a processor of the SOC or by a circuit configured in the programmable logic of the SOC.

At block 304, the values or one or more session key IDs may be optionally configured in the non-volatile memory. An initial session key ID may be configured for each public key which was configured at block 302. The configuration of session key IDs is optional because the initial value for a session key ID may be 0, which would not require the blowing of any e-fuses. However, if a value other than 0 is desired, the e-fuses may be blown to indicate that value.

The WE e-fuse that controls the public keys optionally may be blown at block 306. This may be useful in usage scenarios in which all the public keys are configured in the SOC at initial setup. Blowing the WE e-fuse disables subsequent updating of the public keys.

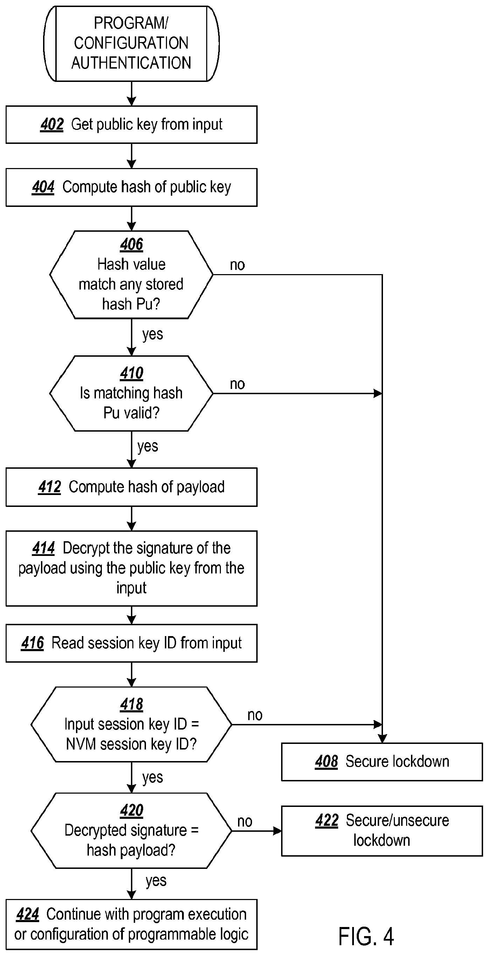

FIG. 4 is a flowchart of a process of authenticating an input payload using a public key and a session key ID. At block 402, the process reads the input public key that accompanies a payload and at block 404 a hash value is computed from the public key. In implementations in which the actual public key is stored in non-volatile memory, no hash value would need to be computed.

If the computed hash value does not match any of the hashed public keys stored in the non-volatile memory, decision block 406 directs the process to block 408 where the system is locked down. For example, a processor performing the authentication may abort further booting of the system or abort configuration of programmable logic.

If the computed hash value does not match any of the hashed public keys stored in the non-volatile memory, decision block 406 directs the process to decision block 410, which checks whether or not the matching hashed public key is valid from the state of the associated valid bit. If the hashed public key is not valid, the system is locked down at block 408.

If the hashed public key is valid, at block 412, a hash value is computed from the payload, and at block 414, the signature that accompanies the payload is read and decrypted using the input public key.

At block 416, the session key ID is read from the input, and decision block 418 determines whether or not the input session key ID matches the session key ID associated with the matching public key in the non-volatile memory. If the input session key ID does not match, the system is locked down at block 408. Otherwise, decision block 420 determines whether or not the decrypted signature is equal to the hash value computed from the payload at block 412. If the decrypted signature does not match, the system is locked down at block 422. Otherwise, the processor may continue with program execution or configuration of programmable logic at block 424.

In an implementation in which the public key and session key ID are hashed together (not shown), a single hash value would be computed from the input public key and session key ID and that hash value would be compared to the hash values of public keys and session key IDs stored in non-volatile memory. Thus, blocks 402, 404, and 406 could be modified to process the input session key ID in combination with the input public key, and blocks 416 and 418 would not be necessary.

FIG. 5 is a flowchart of a process of revoking a public key or a session key. In an SOC implementation, revocation of either a public key or session key can only be performed by authenticated program code executing on a processor of the SOC or by programmable logic of the SOC as configured with an authenticated configuration bitstream.

At block 502, an input payload is authenticated. The payload may be either program code or a configuration bitstream, for example, and may include a session key. The authentication uses a signature of the payload, along with a public key and a session key ID that also accompany the payload.

At block 504, to revoke a public key, the e-fuse that implements a valid bit associated with the public key is blown. Since each session key is used only with one of the possible public keys, revoking the public key effectively revokes the combination of the public key and the associated session key.

To revoke a session key, at block 506, one or more of the set of e-fuses that implements the session key ID associated with the revoked session key are blown. Since blowing an e-fuse changes the value of the session key ID, the previous session key ID stored by the set of e-fuses is revoked, and the new session key ID is indicated by the state of the set of e-fuses. It will be appreciated that blowing only one e-fuse to revoke a session key ID maximizes the number of session key IDs that can be used with that set of e-fuses since once an e-fuse is blown it cannot thereafter be reconfigured to conduct current.

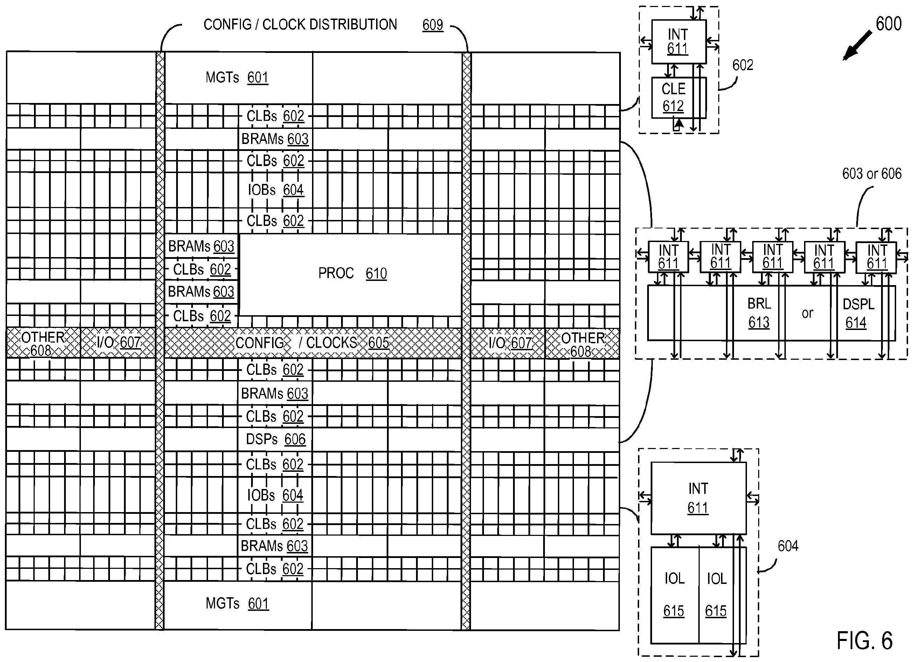

FIG. 6 is an example SOC architecture 600 on which a system may be implemented using the various approaches described herein. Those skilled in the art will appreciate that the SOC of FIG. 6 provides only one example of an integrated circuit device on which the methods of the present invention can be practiced. SOC 600 includes a large number of different programmable tiles including multi-gigabit transceivers (MGTs 601), configurable logic blocks (CLBs 602), random access memory blocks (BRAMs 603), input/output blocks (lOBs 604), configuration and clocking logic (CONFIG/CLOCKS 605), digital signal processing blocks (DSPs 606), specialized input/output blocks (I/O 607) (e.g., configuration ports and clock ports), and other programmable logic 608 such as digital clock managers, analog-to-digital converters, system monitoring logic, and so forth. The example SOC also includes a hardwired processor 610.

In some implementations, each programmable tile includes a programmable interconnect element (INT 611) having standardized connections to and from a corresponding interconnect element in each adjacent tile. Therefore, the programmable interconnect elements taken together implement the programmable interconnect resources for the illustrated SOC. The programmable interconnect element (INT 611) also includes the connections to and from the programmable logic primitive within the same tile, as shown by the examples included at the top of FIG. 6.

For example, a CLB 602 can include a configurable logic primitive (CLE 612) that can be programmed to implement user logic plus a single programmable interconnect element (INT 611). A BRAM 603 can include a BRAM logic primitive (BRL 613) in addition to one or more programmable interconnect elements. Typically, the number of interconnect elements included in a tile depends on the height of the tile. In the pictured embodiment, a BRAM tile has the same height as four CLBs, but other numbers (e.g., five) can also be used. A DSP tile 606 can include a DSP logic primitive (DSPL 614) in addition to an appropriate number of programmable interconnect elements. An IOB 604 can include, for example, two instances of an input/output logic primitive (IOL 615) in addition to one instance of the programmable interconnect element (INT 611). As will be clear to those of skill in the art, the actual I/O pads connected, for example, to the I/O logic primitive 615 are manufactured using metal layered above the various illustrated logic blocks, and typically are not confined to the area of the input/output logic primitive 615.

Some SOCs utilizing the architecture illustrated in FIG. 6 include additional logic blocks that disrupt the regular columnar structure making up a large part of the programmable logic. The additional logic blocks can be programmable blocks and/or dedicated logic. For example, the processor block PROC 610 shown in FIG. 6 spans several columns of CLBs and BRAMs.

In the pictured embodiment, a columnar area near the center of the die (shown shaded in FIG. 6) is used for configuration, clock, and other control logic. Horizontal areas 609 extending from this column are used to distribute the clocks and configuration signals across the breadth of the SOC. A configuration port (not shown) may be used to access configuration memory (not shown) for the programmable logic to configure the programmable logic and interconnect resources. In one embodiment, an internal scrubber (not shown) may continuously read and correct configuration memory via an internal configuration access port.

Note that FIG. 6 is intended to illustrate only an exemplary SOC architecture. The numbers of logic blocks in a column, the relative widths of the columns, the number and order of columns, the types of logic blocks included in the columns, the relative sizes of the logic blocks, and the interconnect/logic implementations included at the top of FIG. 6 are purely exemplary. For example, in an actual SOC more than one adjacent column of CLBs is typically included wherever the CLBs appear, to facilitate the efficient implementation of user logic.

Though aspects and features may in some cases be described in individual figures, it will be appreciated that features from one figure can be combined with features of another figure even though the combination is not explicitly shown or explicitly described as a combination.

Some examples follow below. It should be apparent; however, to one skilled in the art, that one or more other examples and/or variations of these examples may be practiced without all the specific details given below.

An exemplary method described herein relates generally to authenticating data. Such method may include: storing a plurality of combinations of representations of public keys and session key IDs in a non-volatile memory; inputting a payload and accompanying public key, session key ID, and signature of the payload, wherein the signature is a function of the payload and a private key of a key pair that includes the accompanying public key and the private key; determining with a processor whether or not the payload is authentic, from the accompanying public key and session key ID and the combinations stored in the non-volatile memory, and from the signature and the payload; in response to determining that the payload is authentic, processing the payload; and in response to determining that the payload is not authentic, disabling processing of the payload.

Some such methods, may further include: wherein the storing of the plurality of combinations of representations of public keys and session key IDs includes storing the representation of each session key ID in a plurality of e-fuses; establishing a new session key by disabling current flow through one of the plurality of e-fuses of the representations of the session key ID of one of the plurality of combinations.

Some such methods, may further include: wherein the storing a plurality of key states in association with the plurality of combinations of representations of public keys and session key IDs, respectively, wherein each key state indicates whether or not the associated combination is valid; wherein the determining whether or not the payload is authentic from the accompanying public key and session key ID and the combinations stored in the non-volatile memory includes: determining whether or not one of the plurality of combinations has a representation of a public key that matches the accompanying public key and whether or not the combination is valid from the key state associated with the combination; and in response to determining that the one of the combinations has the representation of a public key that matches the accompanying public key and is not valid, designating the payload to be not authentic.

Some such methods may further include: wherein the storing of the plurality of key states in association with the plurality of combinations of representations of public keys and session key IDs includes storing each key state in one or more e-fuses.

Some such methods may further include: wherein the storing of the plurality of combinations of representations of public keys and session key IDs includes storing the representation of each session key ID in a plurality of e-fuses; establishing a new session key by disabling current flow through one of the plurality of e-fuses of the representation of the session key ID of one of the plurality of combinations.

Some such methods may further include: wherein the representation of each public key of the plurality of combinations of representations of public keys and session key IDs is a hash value of a public key; the determining whether or not the payload is authentic from the accompanying public key and session key ID and the combinations stored in the non-volatile memory includes: computing a hash value of the accompanying public key; determining whether or not the hash value of the accompanying public key matches the representation of a public key of one of the plurality of combinations; and designating the payload to be not authentic in response to determining that the hash value of the accompanying public key does not match the representation of a public key of the plurality of combinations.

Some such methods may further include: wherein the determining whether or not the payload is authentic from the accompanying public key and session key ID and the combinations stored in the non-volatile memory includes: for one of the plurality of combinations of representations of public keys and session key IDs that has the representation of the public key that matches the hash value of the accompanying public key, determining whether or not an accompanying session key ID number matches the representation of the session key ID number of the one combination; in response to determining that the accompanying session key ID number matches the representation of the session key ID number of the one combination, designating the payload to be authentic; and in response to determining that the accompanying session key ID number does not match the representation of the session key ID number of the one combination, designating the payload to be not authentic.

Some such methods may further include: wherein the storing of the plurality of combinations of representations of public keys and session key IDs includes storing the representation of each public key in a plurality of e-fuses.

Some such methods may further include: storing a plurality of key states in association with the plurality of combinations of representations of public keys and session key IDs, respectively, wherein each key state indicates whether or not the associated combination is valid; wherein the determining whether or not the payload is authentic from the accompanying public key and session key ID and the combinations stored in the non-volatile memory includes: determining whether or not one of the plurality of combinations has a representation of a public key that matches the accompanying public key and whether or not the combination is valid from the key state associated with the combination; and in response to determining that the one of the combinations has the representation of a public key that matches the accompanying public key and is not valid, designating the payload to be not authentic.

Some such methods may further include: wherein the storing of the plurality of key states in association with the plurality of combinations of representations of public keys and session key IDs includes storing each key state in one or more e-fuses.

Some such methods may further include: wherein the storing of the plurality of combinations of representations of public keys and session key IDs includes storing the representation of each session key ID in a plurality of e-fuses; establishing a new session key by disabling current flow through one of the plurality of e-fuses of the representation of the session key ID of one of the plurality of combinations.

Some such methods may further include: wherein each combination of the plurality of combinations of representations of public keys and session key IDs in the non-volatile memory is a hash value of a public key and a session key ID; the determining whether or not the payload is authentic from the accompanying public key and session key ID and the combinations stored in the non-volatile memory includes: computing a first hash value of the accompanying public key and session key ID; determining whether or not the first hash value matches any of the hash values in the non-volatile memory; and designating the payload to be not authentic in response to determining that the first hash value does not match any of the hash values in the non-volatile memory.

An exemplary apparatus described herein relates generally to an authentication system. The apparatus may include: non-volatile memory configurable for storage of a plurality of combinations of representations of public keys and session key IDs; a processor coupled to the non-volatile storage, the processor configured to: input a payload and accompanying public key, session key ID, and signature of the payload, wherein the signature is a function of the payload and a private key of a key pair that includes the accompanying public key and the private key; determine whether or not the payload is authentic, from the accompanying public key and session key ID and the combinations stored in the non-volatile memory, and from the signature and the payload; responsive to determining that the payload is authentic, process the payload; and responsive to determining that the payload is not authentic, disable processing of the payload.

Some such apparatus may further include: wherein the non-volatile memory includes a plurality of e-fuses for storage of the combinations of representations of public keys and session key IDs; and the processor is further configured to establish a new session key by disabling current flow through one of the plurality of e-fuses of the representations of the session key ID of one of the plurality of combinations.

Some such apparatus may further include: wherein the non-volatile memory includes storage for a plurality of key states in association with the plurality of combinations of representations of public keys and session key IDs, respectively, wherein each key state indicates whether or not the associated combination is valid; and the processor is further configured to: determine whether or not one of the combinations has a representation of a public key that matches the accompanying public key and whether or not the combination is valid from the key state associated with the combination; and in response to determining that the one of the combinations has the representation of a public key that matches the accompanying public key and is not valid, designate the payload to be not authentic.

Some such apparatus may further include: wherein the non-volatile memory includes a plurality of e-fuses for storage of the plurality of key states.

Some such apparatus may further include: wherein the non-volatile memory includes a plurality of e-fuses for storage of the representations of the session key IDs; and the processor is further configured to establish a new session key by disabling current flow through one of the plurality of e-fuses of the representation of the session key ID of one of the plurality of combinations.

Some such apparatus may further include: wherein the representation of each public key of the plurality of combinations of representations of public keys and session key IDs is a hash value of a public key; the processor, in determining whether or not the payload is authentic from the accompanying public key and session key ID and the combinations stored in the non-volatile memory, is configured to: compute a hash value of the accompanying public key; determine whether or not the hash value of the accompanying public key matches the representation of a public key of one of the plurality of combinations; and designate the payload to be not authentic in response to determining that the hash value of the accompanying public key does not match the representation of a public key of the plurality of combinations.

Some such apparatus may further include: wherein the processor, in determining whether or not the payload is authentic from the accompanying public key and session key ID and the combinations stored in the non-volatile memory, is configured to: for one of the plurality of combinations of representations of public keys and session key IDs that has the representation of the public key that matches the hash value of the accompanying public key, determine whether or not an accompanying session key ID number matches the representation of the session key ID number of the one combination; in response to determining that the accompanying session key ID number matches the representation of the session key ID number of the one combination, designate the payload to be authentic; and in response to determining that the accompanying session key ID number does not match the representation of the session key ID number of the one combination, designate the payload to be not authentic.

Some such apparatus may further include: wherein each combination of the plurality of combinations of representations of public keys and session key IDs in the non-volatile memory is a hash value of a public key and a session key ID; the processor, in determining whether or not the payload is authentic from the accompanying public key and session key ID and the combinations stored in the non-volatile memory, is configured to: compute a first hash value of the accompanying public key and session key ID; determine whether or not the first hash value matches any of the hash values in the non-volatile memory; and designate the payload to be not authentic in response to determining that the first hash value does not match any of the hash values in the non-volatile memory.

The system and methods are thought to be applicable to a variety of systems for authentication. Other aspects and features will be apparent to those skilled in the art from consideration of the specification. The systems and methods may be implemented as one or more processors configured to execute software, as an application specific integrated circuit (ASIC), or as a logic on a programmable logic device. It is intended that the specification and drawings be considered as examples only, with a true scope of the invention being indicated by the following claims.

## Claims

1. A method of authenticating data, comprising:
storing a plurality of combinations of representations of public keys (134) and session key IDs (136) in a non-volatile memory (132);
wherein the storing of the plurality of combinations of representations of public keys (134) and session key IDs (136) includes storing the representation of each session key ID (136) in a plurality of e-fuses;
inputting a payload (106) and accompanying public key (108), session key ID (110), and signature (120) of the payload (106), wherein the signature (120) is a function of the payload (106) and a private key (116) of a key pair that includes the accompanying public key (108) and the private key (116);
determining with a processor (202) whether or not the payload (106) is authentic, from the accompanying public key (108) and session key ID (110) and the combinations stored in the non-volatile memory (132), and from the signature (120) and the payload (106);
in response to determining that the payload (106) is authentic, processing the payload (106);
in response to determining that the payload (106) is not authentic, disabling processing of the payload (106); and
establishing a new session key ID by disabling current flow through only one of the plurality of e-fuses of the representations of the session key ID (134) of one of the plurality of combinations.

2. The method of claim 1, further comprising:
storing a plurality of key states in association with the plurality of combinations of representations of public keys (134) and session key IDs (110), respectively, wherein each key state indicates whether or not the associated combination is valid;
wherein the determining whether or not the payload (106) is authentic from the accompanying public key (108) and session key ID (110) and the combinations stored in the non-volatile memory (132) includes:
determining whether or not one of the plurality of combinations has a representation of a public key (134) that matches the accompanying public key (108) and whether or not the combination is valid from the key state associated with the combination; and
in response to determining that the one of the combinations has the representation of a public key (134) that matches the accompanying public key (108) and is not valid, designating the payload (106) to be not authentic.

3. The method of claim 2, wherein the storing of the plurality of key states in association with the plurality of combinations of representations of public keys (134) and session key IDs (110) includes storing each key state in one or more e-fuses.

4. The method of claim 1, wherein:
the representation of each public key (134) of the plurality of combinations of representations of public keys (134) and session key IDs (136) is a hash value of a public key;
the determining whether or not the payload (106) is authentic from the accompanying public key (108) and session key ID (110) and the combinations stored in the non-volatile memory (132) includes:
computing a hash value of the accompanying public key (108);
determining whether or not the hash value of the accompanying public key (108) matches the representation of a public key (134) of one of the plurality of combinations; and
designating the payload (106) to be not authentic in response to determining that the hash value of the accompanying public key (108) does not match the representation of a public key (134) of the plurality of combinations.

5. The method of claim 4, wherein the determining whether or not the payload (106) is authentic from the accompanying public key (108) and session key ID (110) and the combinations stored in the non-volatile memory (132) includes:
for one of the plurality of combinations of representations of public keys (134) and session key IDs (136) that has the representation of the public key (134) that matches the hash value of the accompanying public key (108), determining whether or not an accompanying session key ID (110) number matches the representation of the session key ID (136) number of the one combination;
in response to determining that the accompanying session key ID (110) number matches the representation of the session key ID (136) number of the one combination, designating the payload (106) to be authentic; and
in response to determining that the accompanying session key ID (110) number does not match the representation of the session key ID (136) number of the one combination, designating the payload (106) to be not authentic.

6. The method of claim 4, further comprising:
storing a plurality of key states in association with the plurality of combinations of representations of public keys (134) and session key IDs (136), respectively, wherein each key state indicates whether or not the associated combination is valid;
wherein the determining whether or not the payload (106) is authentic from the accompanying public key (108) and session key ID (110) and the combinations stored in the non-volatile memory (132) includes:
determining whether or not one of the plurality of combinations has a representation of a public key (134) that matches the accompanying public key (108) and whether or not the combination is valid from the key state associated with the combination; and
in response to determining that the one of the combinations has the representation of a public key (134) that matches the accompanying public key (108) and is not valid, designating the payload (106) to be not authentic;
wherein the storing of the plurality of combinations of representations of public keys (134) and session key IDs (136) includes storing the representation of each session key ID (136) in a plurality of e-fuses; and
establishing a new session key by disabling current flow through one of the plurality of e-fuses of the representation of the session key ID (136) of one of the plurality of combinations.

7. An authentication system (200), comprising:
non-volatile memory (132) configurable for storage of a plurality of combinations of representations of public keys (134) and session key IDs (136);
the non-volatile memory (132) includes a plurality of e-fuses for storage of the combinations of representations of public keys (134) and session key IDs (136);
a processor (202) coupled to the non-volatile storage (132), the processor (202) configured to:
input a payload (106) and accompanying public key (108), session key ID (110), and signature (120) of the payload (106), wherein the signature (120) is a function of the payload (106) and a private key (116) of a key pair that includes the accompanying public key (108) and the private key (116);
determine whether or not the payload (106) is authentic, from the accompanying public key (108) and session key ID (136) and the combinations stored in the non-volatile memory (132), and from the signature (120) and the payload (106);
responsive to determining that the payload (106) is authentic, process the payload (106);
responsive to determining that the payload (106) is not authentic, disable processing of the payload (106); and
establish a new session key ID by disabling current flow through only one of the plurality of e-fuses of the representations of the session key ID (134) of one of the plurality of combinations.

8. The system (200) of claim 7, wherein:
the non-volatile memory (132) includes storage for a plurality of key states in association with the plurality of combinations of representations of public keys (134) and session key IDs (136), respectively, wherein each key state indicates whether or not the associated combination is valid; and
the processor (202) is further configured to:
determine whether or not one of the combinations has a representation of a public key (134) that matches the accompanying public key (108) and whether or not the combination is valid from the key state associated with the combination; and
in response to determining that the one of the combinations has the representation of a public key (134) that matches the accompanying public key (108) and is not valid, designate the payload (106) to be not authentic.

9. The system (200) of claim 8, wherein the non-volatile memory (132) includes a plurality of e-fuses for storage of the plurality of key states.

10. The system (200) of claim 9, wherein:
the non-volatile memory (132) includes a plurality of e-fuses for storage of the representations of the session key IDs (136); and
the processor (202) is further configured to establish a new session key by disabling current flow through one of the plurality of e-fuses of the representation of the session key ID (136) of one of the plurality of combinations.

11. The system (200) of claim 9, wherein:
the representation of each public key (134) of the plurality of combinations of representations of public keys (134) and session key IDs (136) is a hash value of a public key;
the processor (202), in determining whether or not the payload (106) is authentic from the accompanying public key (108) and session key ID (110) and the combinations stored in the non-volatile memory (132), is configured to:
compute a hash value of the accompanying public key (108);
determine whether or not the hash value of the accompanying public key (108) matches the representation of a public key (134) of one of the plurality of combinations; and
designate the payload (106) to be not authentic in response to determining that the hash value of the accompanying public key (108) does not match the representation of a public key (134) of the plurality of combinations.

12. The system (200) of claim 11, wherein the processor (202), in determining whether or not the payload (106) is authentic from the accompanying public key (108) and session key ID (110) and the combinations stored in the non-volatile memory (132), is configured to:
for one of the plurality of combinations of representations of public keys (134) and session key IDs (136) that has the representation of the public key (134) that matches the hash value of the accompanying public key (108), determine whether or not an accompanying session key ID (110) number matches the representation of the session key ID (136) number of the one combination;
in response to determining that the accompanying session key ID (110) number matches the representation of the session key ID (136) number of the one combination, designate the payload (106) to be authentic; and
in response to determining that the accompanying session key ID (110) number does not match the representation of the session key ID (136) number of the one combination, designate the payload (106) to be not authentic.

13. The system (200) of claim 8, wherein:
each combination of the plurality of combinations of representations of public keys (134) and session key IDs (136) in the non-volatile memory (132) is a hash value of a public key (108) and a session key ID (110);
the processor (202), in determining whether or not the payload (106) is authentic from the accompanying public key (108) and session key ID (110) and the combinations stored in the non-volatile memory (132), is configured to:
compute a first hash value of the accompanying public key (108) and session key ID (110);
determine whether or not the first hash value matches any of the hash values in the non-volatile memory (132); and
designate the payload (106) to be not authentic in response to determining that the first hash value does not match any of the hash values in the non-volatile memory (132).

## Patentansprüche

1. Verfahren zum Authentifizieren von Daten, umfassend:
Speichern einer Vielzahl von Kombinationen von Repräsentationen von öffentlichen Schlüsseln (134) und Sitzungsschlüssel-IDs (136) in einem nichtflüchtigen Speicher (132);
wobei das Speichern der Vielzahl von Kombinationen von Repräsentationen von öffentlichen Schlüsseln (134) und Sitzungsschlüssel-IDs (136) das Speichern der Repräsentation von jeder Sitzungsschlüssel-ID (136) in einer Vielzahl von e-Sicherungen einschließt;
Eingeben einer Nutzlast (106) und eines zugehörigen öffentlichen Schlüssels (108), einer Sitzungsschlüssel-ID (110) und einer Signatur (120) der Nutzlast (106), wobei die Signatur (120) abhängig von der Nutzlast (106) und einem privaten Schlüssel (116) eines Schlüsselpaares ist, das den zugehörigen öffentlichen Schlüssel (108) und den privaten Schlüssel (116) einschließt;
Bestimmen, mit einem Prozessor (202), ob die Nutzlast (106) authentisch ist oder nicht, aus dem zugehörigen öffentlichen Schlüssel (108) und der Sitzungsschlüssel-ID (110) und den in dem nichtflüchtigen Speicher (132) gespeicherten Kombinationen sowie aus der Signatur (120) und der Nutzlast (106);
als Reaktion auf das Bestimmen, dass die Nutzlast (106) authentisch ist, Verarbeiten der Nutzlast (106);
als Reaktion auf das Bestimmen, dass die Nutzlast (106) nicht authentisch ist, Deaktivieren des Verarbeitens der Nutzlast (106); und
Einrichten einer neuen Sitzungsschlüssel-ID durch Deaktivieren des Stromflusses durch nur eine der Vielzahl von e-Sicherungen der Repräsentationen der Sitzungsschlüssel-ID (134) von einer der Vielzahl der Kombinationen.

2. Verfahren nach Anspruch 1, ferner umfassend:
Speichern einer Vielzahl von Schlüsselzuständen in Verbindung mit der Vielzahl von Kombinationen von Repräsentationen von öffentlichen Schlüsseln (134) bzw. Sitzungsschlüssel-IDs (110), wobei jeder Schlüsselzustand angibt, ob die zugeordnete Kombination gültig ist oder nicht;
wobei das Bestimmen aus dem zugehörigen öffentlichen Schlüssel (108) und der Sitzungsschlüssel-ID (110) und den in dem nichtflüchtigen Speicher (132) gespeicherten Kombinationen, ob die Nutzlast (106) authentisch ist oder nicht, einschließt:
Bestimmen, ob eine der Vielzahl von Kombinationen eine Repräsentation eines öffentlichen Schlüssels (134) aufweist, die mit dem zugehörigen öffentlichen Schlüssel (108) übereinstimmt, und ob die Kombination von dem der Kombination zugeordneten Schlüsselzustand gültig ist oder nicht; und
als Reaktion auf das Bestimmen, dass die eine der Kombinationen die Repräsentation eines öffentlichen Schlüssels (134) aufweist, der mit dem zugehörigen öffentlichen Schlüssel (108) übereinstimmt und nicht gültig ist, Bezeichnen der Nutzlast (106) als nicht authentisch.

3. Verfahren nach Anspruch 2, wobei das Speichern der Vielzahl von Schlüsselzuständen in Verbindung mit der Vielzahl von Kombinationen von Repräsentationen von öffentlichen Schlüsseln (134) und Sitzungsschlüssel-IDs (110) das Speichern jedes Schlüsselzustands in einem oder mehreren e-Sicherungen einschließt.

4. Verfahren nach Anspruch 1, wobei:
die Repräsentation jedes öffentlichen Schlüssels (134) der Vielzahl von Kombinationen von Repräsentationen von öffentlichen Schlüsseln (134) und Sitzungsschlüssel-IDs (136) ein Hash-Wert eines öffentlichen Schlüssels ist;
das Bestimmen aus dem zugehörigen öffentlichen Schlüssel (108) und der Sitzungsschlüssel-ID (110) und den im nichtflüchtigen Speicher (132) gespeicherten Kombinationen, ob die Nutzlast (106) authentisch ist oder nicht, einschließt:
Berechnen eines Hash-Werts des zugehörigen öffentlichen Schlüssels (108);
Bestimmen, ob der Hash-Wert des zugehörigen öffentlichen Schlüssels (108) mit der Repräsentation eines öffentlichen Schlüssels (134) von einer der Vielzahl von Kombinationen übereinstimmt oder nicht; und
Bezeichnen der Nutzlast (106) als nicht authentisch als Reaktion auf das Bestimmen, dass der Hash-Wert des zugehörigen öffentlichen Schlüssels (108) nicht mit der Repräsentation eines öffentlichen Schlüssels (134) der Vielzahl von Kombinationen übereinstimmt.

5. Verfahren nach Anspruch 4, wobei das Bestimmen aus dem zugehörigen öffentlichen Schlüssel (108) und der Sitzungsschlüssel-ID (110) und den in dem nichtflüchtigen Speicher (132) gespeicherten Kombinationen, ob die Nutzlast (106) authentisch ist oder nicht, einschließt:
für eine der Vielzahl von Kombinationen von Repräsentationen von öffentlichen Schlüsseln (134) und Sitzungsschlüssel-IDs (136), die die Repräsentation des öffentlichen Schlüssels (134) aufweist, die mit dem Hash-Wert des zugehörigen öffentlichen Schlüssels (108) übereinstimmt, Bestimmen, ob eine zugehörige Sitzungsschlüssel-ID-Nummer (110) mit der Repräsentation der Sitzungsschlüssel-ID-Nummer (136) der einen Kombination übereinstimmt oder nicht;
als Reaktion auf das Bestimmen, dass die zugehörige Sitzungsschlüssel-ID-Nummer (110) mit der Repräsentation der Sitzungsschlüssel-ID-Nummer (136) der einen Kombination übereinstimmt, Bezeichnen der Nutzlast (106) als authentisch; und
als Reaktion auf das Bestimmen, dass die zugehörige Sitzungsschlüssel-ID-Nummer (110) nicht mit der Repräsentation der Sitzungsschlüssel-ID-Nummer (136) der einen Kombination übereinstimmt, Bezeichnen der Nutzlast (106) als nicht authentisch.

6. Verfahren nach Anspruch 4, ferner umfassend:
Speichern einer Vielzahl von Schlüsselzuständen in Verbindung mit der Vielzahl von Kombinationen von Repräsentationen von öffentlichen Schlüsseln (134) bzw. Sitzungsschlüssel-IDs (136), wobei jeder Schlüsselzustand angibt, ob die zugeordnete Kombination gültig ist oder nicht;
wobei das Bestimmen aus dem zugehörigen öffentlichen Schlüssel (108) und der Sitzungsschlüssel-ID (110) und den in dem nichtflüchtigen Speicher (132) gespeicherten Kombinationen, ob die Nutzlast (106) authentisch ist oder nicht, einschließt:
Bestimmen, ob eine der Vielzahl von Kombinationen eine Repräsentation eines öffentlichen Schlüssels (134) aufweist, die mit dem zugehörigen öffentlichen Schlüssel (108) übereinstimmt, und ob die Kombination von dem der Kombination zugeordneten Schlüsselzustand gültig ist oder nicht; und
als Reaktion auf das Bestimmen, dass die eine der Kombinationen die Repräsentation eines öffentlichen Schlüssels (134) aufweist, der mit dem zugehörigen öffentlichen Schlüssel (108) übereinstimmt und nicht gültig ist, Bezeichnen der Nutzlast (106) als nicht authentisch;
wobei das Speichern der Vielzahl von Kombinationen von Repräsentationen von öffentlichen Schlüsseln (134) und Sitzungsschlüssel-IDs (136) das Speichern der Repräsentation von jeder Sitzungsschlüssel-ID (136) in einer Vielzahl von e-Sicherungen einschließt; und
Einrichten eines neuen Sitzungsschlüssels durch Deaktivieren des Stromflusses durch eine der Vielzahl von e-Sicherungen der Repräsentation der Sitzungsschlüssel-ID (136) einer der Vielzahl von Kombinationen.

7. Authentifizierungssystem (200), umfassend:
nichtflüchtigen Speicher (132), der zur Speicherung einer Vielzahl von Kombinationen von Repräsentationen von öffentlichen Schlüsseln (134) und Sitzungsschlüssel-IDs (136) konfigurierbar ist;
wobei der nichtflüchtige Speicher (132) eine Vielzahl von e-Sicherungen zur Speicherung der Kombinationen der Repräsentationen von öffentlichen Schlüsseln (134) und Sitzungsschlüssel-IDs (136) einschließt;
einen mit dem nichtflüchtigen Speicher (132) gekoppelten Prozessor (202), wobei der Prozessor (202) konfiguriert ist zum:
Eingeben einer Nutzlast (106) und eines zugehörigen öffentlichen Schlüssels (108), einer Sitzungsschlüssel-ID (110) und einer Signatur (120) der Nutzlast (106), wobei die Signatur (120) von der Nutzlast (106) und einem privaten Schlüssel (116) eines Schlüsselpaares abhängig ist, das den zugehörigen öffentlichen Schlüssel (108) und den privaten Schlüssel (116) einschließt;
Bestimmen, aus dem zugehörigen öffentlichen Schlüssel (108) und der Sitzungsschlüssel-ID (136) und den in dem nichtflüchtigen Speicher (132) gespeicherten Kombinationen, sowie aus der Signatur (120) und der Nutzlast (106), ob die Nutzlast (106) authentisch ist oder nicht;
als Reaktion auf das Bestimmen, dass die Nutzlast (106) authentisch ist, Verarbeiten der Nutzlast (106);
als Reaktion auf das Bestimmen, dass die Nutzlast (106) nicht authentisch ist, Deaktivieren der Verarbeitung der Nutzlast (106); und
Einrichten einer neuen Sitzungsschlüssel-ID durch Deaktivieren des Stromflusses durch nur eine der Vielzahl der e-Sicherungen der Repräsentationen der Sitzungsschlüssel-ID (134) von einer der Vielzahl der Kombinationen.

8. System (200) nach Anspruch 7, wobei:
der nichtflüchtige Speicher (132) Speicher für eine Vielzahl von Schlüsselzuständen in Verbindung mit der Vielzahl von Kombinationen von Repräsentationen von öffentlichen Schlüsseln (134) bzw. Sitzungsschlüssel-IDs (136) einschließt, wobei jeder Schlüsselzustand angibt, ob die zugeordnete Kombination gültig ist oder nicht; und
der Prozessor (202) ferner konfiguriert ist zum:
Bestimmen, ob eine der Kombinationen eine Repräsentation eines öffentlichen Schlüssels (134) aufweist, die mit dem zugehörigen öffentlichen Schlüssel (108) übereinstimmt, und ob die Kombination von dem der Kombination zugeordneten Schlüsselzustand gültig ist oder nicht; und
als Reaktion auf das Bestimmen, dass die eine der Kombinationen die Repräsentation eines öffentlichen Schlüssels (134) aufweist, der mit dem zugehörigen öffentlichen Schlüssel (108) übereinstimmt und nicht gültig ist, Bezeichnen der Nutzlast (106) als nicht authentisch.

9. System (200) nach Anspruch 8, wobei der nichtflüchtige Speicher (132) eine Vielzahl von e-Sicherungen zur Speicherung der Vielzahl von Schlüsselzuständen einschließt.

10. System (200) nach Anspruch 9, wobei:
der nichtflüchtige Speicher (132) eine Vielzahl von e-Sicherungen zum Speichern der Repräsentationen der Sitzungsschlüssel-IDs(136) einschließt; und
der Prozessor (202) ferner so konfiguriert ist, dass er einen neuen Sitzungsschlüssel durch Deaktivieren des Stromflusses durch eine der Vielzahl von e-Sicherungen der Repräsentation der Sitzungsschlüssel-ID (136) einer der Vielzahl von Kombinationen einrichtet.

11. System (200) nach Anspruch 9, wobei:
die Repräsentation jedes öffentlichen Schlüssels (134) der Vielzahl von Kombinationen von Repräsentationen von öffentlichen Schlüsseln (134) und Sitzungsschlüssel-IDs (136) ein Hash-Wert eines öffentlichen Schlüssels ist;
der Prozessor (202) beim Bestimmen aus dem zugehörigen öffentlichen Schlüssel (108) und der Sitzungsschlüssel-ID (110) und den im nichtflüchtigen Speicher (132) gespeicherten Kombinationen, ob die Nutzlast (106) authentisch ist oder nicht, konfiguriert ist zum:
Berechnen eines Hash-Werts des zugehörigen öffentlichen Schlüssels (108);
Bestimmen, ob der Hash-Wert des zugehörigen öffentlichen Schlüssels (108) mit der Repräsentation eines öffentlichen Schlüssels (134) von einer der Vielzahl von Kombinationen übereinstimmt oder nicht; und
Bezeichnen der Nutzlast (106) als nicht authentisch als Reaktion auf das Bestimmen, dass der Hash-Wert des zugehörigen öffentlichen Schlüssels (108) nicht mit der Repräsentation eines öffentlichen Schlüssels (134) der Vielzahl von Kombinationen übereinstimmt.

12. System (200) nach Anspruch 11, wobei der Prozessor (202) beim Bestimmen aus dem zugehörigen öffentlichen Schlüssel (108) und der Sitzungsschlüssel-ID (110) und den im nichtflüchtigen Speicher (132) gespeicherten Kombinationen, ob die Nutzlast (106) authentisch ist oder nicht, konfiguriert ist zum:
Bestimmen, für eine der mehreren Kombinationen von Repräsentationen von öffentlichen Schlüsseln (134) und Sitzungsschlüssel-IDs (136), die die Repräsentation des öffentlichen Schlüssels (134) aufweist, die mit dem Hash-Wert des zugehörigen öffentlichen Schlüssels (108) übereinstimmt, ob eine zugehörige Sitzungsschlüssel-ID-Nummer (110) mit der Repräsentation der Sitzungsschlüssel-ID-Nummer (136) der einen Kombination übereinstimmt oder nicht;
als Reaktion auf das Bestimmen, dass die zugehörige Sitzungsschlüssel-ID-Nummer (110) mit der Repräsentation der Sitzungsschlüssel-ID-Nummer (136) der einen Kombination übereinstimmt, Bezeichnen der Nutzlast (106) als authentisch; und
als Reaktion auf das Bestimmen, dass die zugehörige Sitzungsschlüssel-ID-Nummer (110) nicht mit der Repräsentation der Sitzungsschlüssel-ID-Nummer (136) der einen Kombination übereinstimmt, Bezeichnen der Nutzlast (106) als nicht authentisch.

13. System (200) nach Anspruch 8, wobei:
jede Kombination der Vielzahl von Kombinationen von Repräsentationen von öffentlichen Schlüsseln (134) und Sitzungsschlüssel-IDs (136) in dem nichtflüchtigen Speicher (132) ein Hash-Wert eines öffentlichen Schlüssels (108) und einer Sitzungsschlüssel-ID (110) ist;
der Prozessor (202) beim Bestimmen aus dem zugehörigen öffentlichen Schlüssel (108) und der Sitzungsschlüssel-ID (110) und den im nichtflüchtigen Speicher (132) gespeicherten Kombinationen, ob die Nutzlast (106) authentisch ist oder nicht, konfiguriert ist zum:
Berechnen eines ersten Hash-Werts des zugehörigen öffentlichen Schlüssels (108) und der Sitzungsschlüssel-ID (110);
Bestimmen, ob der erste Hash-Wert mit einem der Hash-Werte im nichtflüchtigen Speicher übereinstimmt oder nicht (132); und
Bezeichnen der Nutzlast (106) als nicht authentisch als Reaktion auf das Bestimmen, dass der erste Hash-Wert mit keinem der Hash-Werte im nichtflüchtigen Speicher (132) übereinstimmt.

## Revendications

1. Procédé d'authentification de données, comprenant les étapes ci-dessous consistant à :
stocker une pluralité de combinaisons de représentations de clés publiques (134) et d'identificateurs, ID, de clés de session (136) dans une mémoire non volatile (132) ;
dans lequel l'étape de stockage de la pluralité de combinaisons de représentations de clés publiques (134) et d'identificateurs de clés de session (136) consiste à stocker la représentation de chaque identificateur de clé de session (136) dans une pluralité de fusibles électroniques ;
entrer une charge utile (106), et une clé publique d'accompagnement (108), un identificateur de clé de session d'accompagnement (110) et une signature (120) de la charge utile (106), dans lequel la signature (120) est fonction de la charge utile (106) et d'une clé privée (116) d'une paire de clés qui inclut la clé publique d'accompagnement (108) et la clé privée (116) ;
déterminer, au moyen d'un processeur (202), si la charge utile (106) est authentique ou non, à partir de la clé publique d'accompagnement (108), de l'identificateur de clé de session d'accompagnement (110), et des combinaisons stockées dans la mémoire non volatile (132), et à partir de la signature (120) et de la charge utile (106) ;
en réponse à une détermination selon laquelle la charge utile (106) est authentique, traiter la charge utile (106) ;
en réponse à une détermination selon laquelle la charge utile (106) n'est pas authentique, désactiver le traitement de la charge utile (106) ; et
établir un nouvel identificateur de clé de session en désactivant un flux en cours, à travers un seul de la pluralité de fusibles électroniques, des représentations de l'identificateur de clé de session (134) de l'une de la pluralité de combinaisons.

2. Procédé selon la revendication 1, comprenant en outre l'étape ci-dessous consistant à :
stocker une pluralité d'états de clé en association avec la pluralité de combinaisons de représentations de clés publiques (134) et d'identificateurs de clés de session (110), respectivement, dans lequel chaque état de clé indique si la combinaison associée est valide ou non ;
dans lequel l'étape consistant à déterminer si la charge utile (106) est authentique ou non à partir de la clé publique d'accompagnement (108), de l'identificateur de clé de session d'accompagnement (110), et des combinaisons stockées dans la mémoire non volatile (132), inclut les étapes ci-dessous consistant à :
déterminer si l'une de la pluralité de combinaisons présente ou non une représentation d'une clé publique (134) qui correspond à la clé publique d'accompagnement (108), et si la combinaison est valide ou non, à partir de l'état de clé associé à la combinaison ; et
en réponse à une détermination selon laquelle ladite une des combinaisons présente la représentation d'une clé publique (134) qui correspond à la clé publique d'accompagnement (108), et n'est pas valide, désigner la charge utile (106) comme étant non authentique.

3. Procédé selon la revendication 2, dans lequel l'étape de stockage de la pluralité d'états de clé en association avec la pluralité de combinaisons de représentations de clés publiques (134) et d'identificateurs de clés de session (110) consiste à stocker chaque état de clé dans un ou plusieurs fusibles électroniques.

4. Procédé selon la revendication 1, dans lequel :
la représentation de chaque clé publique (134) de la pluralité de combinaisons de représentations de clés publiques (134) et d'identificateurs de clés de session (136) est une valeur de hachage d'une clé publique ;
l'étape consistant à déterminer si la charge utile (106) est authentique ou non à partir de la clé publique d'accompagnement (108), de l'identificateur de clé de session d'accompagnement (110), et des combinaisons stockées dans la mémoire non volatile (132), comprend les étapes ci-dessous consistant à :
calculer une valeur de hachage de la clé publique d'accompagnement (108) ;
déterminer si la valeur de hachage de la clé publique d'accompagnement (108) correspond ou non à la représentation d'une clé publique (134) de l'une de la pluralité de combinaisons ; et
désigner la charge utile (106) comme étant non authentique en réponse à une détermination selon laquelle la valeur de hachage de la clé publique d'accompagnement (108) ne correspond pas à la représentation d'une clé publique (134) de la pluralité de combinaisons.

5. Procédé selon la revendication 4, dans lequel l'étape consistant à déterminer si la charge utile (106) est authentique ou non à partir de la clé publique d'accompagnement (108), de l'identificateur de clé de session d'accompagnement (110), et des combinaisons stockées dans la mémoire non volatile (132), inclut les étapes ci-dessous consistant à :
pour l'une de la pluralité de combinaisons de représentations de clés publiques (134) et d'identificateurs de clés de session (136) qui présente la représentation de la clé publique (134) qui correspond à la valeur de hachage de la clé publique d'accompagnement (108), déterminer si un numéro d'identificateur de clé de session d'accompagnement (110) correspond ou non à la représentation du numéro d'identificateur de clé de session (136) de ladite une combinaison ;
en réponse à une détermination selon laquelle le numéro d'identificateur de clé de session d'accompagnement (110) correspond à la représentation du numéro d'identificateur de clé de session (136) de la combinaison, désigner la charge utile (106) comme étant authentique ; et
en réponse à une détermination selon laquelle le numéro d'identificateur de clé de session d'accompagnement (110) ne correspond pas à la représentation du numéro d'identificateur de clé de session (136) de ladite une combinaison, désigner la charge utile (106) comme étant non authentique.

6. Procédé selon la revendication 4, comprenant en outre les étapes ci-dessous consistant à :
stocker une pluralité d'états de clé en association avec la pluralité de combinaisons de représentations de clés publiques (134) et d'identificateurs de clés de session (136), respectivement, dans lequel chaque état de clé indique si la combinaison associée est valide ou non ;
dans lequel l'étape consistant à déterminer si la charge utile (106) est authentique ou non à partir de la clé publique d'accompagnement (108), de l'identificateur de clé de session d'accompagnement (110), et des combinaisons stockées dans la mémoire non volatile (132), inclut les étapes ci-dessous consistant à :
déterminer si l'une de la pluralité de combinaisons présente ou non une représentation d'une clé publique (134) qui correspond à la clé publique d'accompagnement (108), et si la combinaison est valide ou non, à partir de l'état de clé associé à la combinaison ; et
en réponse à une détermination selon laquelle ladite une des combinaisons présente la représentation d'une clé publique (134) qui correspond à la clé publique d'accompagnement (108), et n'est pas valide, désigner la charge utile (106) comme étant non authentique ;
dans lequel l'étape de stockage de la pluralité de combinaisons de représentations de clés publiques (134) et d'identificateurs de clés de session (136) consiste à stocker la représentation de chaque identificateur de clé de session (136) dans une pluralité de fusibles électroniques ; et
établir une nouvelle clé de session en désactivant un flux en cours à travers un fusible de la pluralité de fusibles électroniques de la représentation de l'identificateur de clé de session (136) de l'une de la pluralité de nombreuses combinaisons.

7. Système d'authentification (200), comprenant :
une mémoire non volatile (132) configurable pour le stockage d'une pluralité de combinaisons de représentations de clés publiques (134) et d'identificateurs de clés de session (136) ;
dans lequel la mémoire non volatile (132) inclut une pluralité de fusibles électroniques pour le stockage des combinaisons de représentations de clés publiques (134) et d'identificateurs de clés de session (136) ;
un processeur (202) couplé à la mémoire non volatile (132), le processeur (202) étant configuré de manière à :
entrer une charge utile (106), et une clé publique d'accompagnement (108), un identificateur de clé de session d'accompagnement (110) et une signature (120) de la charge utile (106), dans lequel la signature (120) est fonction de la charge utile (106) et d'une clé privée (116) d'une paire de clés qui inclut la clé publique d'accompagnement (108) et la clé privée (116) ;
déterminer si la charge utile (106) est authentique ou non, à partir de la clé publique d'accompagnement (108), de l'identificateur de clé de session d'accompagnement (136), et des combinaisons stockées dans la mémoire non volatile (132), et à partir de la signature (120) et de la charge utile (106) ;
en réponse à une détermination selon laquelle la charge utile (106) est authentique, traiter la charge utile (106) ;
en réponse à une détermination selon laquelle la charge utile (106) n'est pas authentique, désactiver le traitement de la charge utile (106) ; et
établir un nouvel identificateur de clé de session en désactivant un flux en cours, à travers un seul de la pluralité de fusibles électroniques, des représentations de l'identificateur de clé de session (134) de l'une de la pluralité de combinaisons.

8. Système (200) selon la revendication 7, dans lequel :
la mémoire non volatile (132) inclut un stockage pour une pluralité d'états de clé en association avec la pluralité de combinaisons de représentations de clés publiques (134) et d'identificateurs de clés de session (136), respectivement, dans lequel chaque état de clé indique si la combinaison associée est valide ou non ; et
le processeur (202) est en outre configuré de manière à :
déterminer si l'une des combinaisons présente ou non une représentation d'une clé publique (134) qui correspond à la clé publique d'accompagnement (108), et si la combinaison est valide ou non, à partir de l'état de clé associé à la combinaison ; et
en réponse à une détermination selon laquelle ladite une des combinaisons présente la représentation d'une clé publique (134) qui correspond à la clé publique d'accompagnement (108), et n'est pas valide, désigner la charge utile (106) comme étant non authentique.

9. Système (200) selon la revendication 8, dans lequel la mémoire non volatile (132) inclut une pluralité de fusibles électroniques pour le stockage de la pluralité d'états de clé.

10. Système (200) selon la revendication 9, dans lequel :
la mémoire non volatile (132) inclut une pluralité de fusibles électroniques pour le stockage des représentations des identificateurs de clés de session (136) ; et
le processeur (202) est en outre configuré de manière à établir une nouvelle clé de session en désactivant le flux en cours à travers un fusible de la pluralité de fusibles électroniques de la représentation de l'identificateur de clé de session (136) de l'une de la pluralité de nombreuses combinaisons.

11. Système (200) selon la revendication 9, dans lequel :
la représentation de chaque clé publique (134) de la pluralité de combinaisons de représentations de clés publiques (134) et d'identificateurs de clés de session (136) est une valeur de hachage d'une clé publique ;
le processeur (202), dans le cadre de l'étape consistant à déterminer si la charge utile (106) est authentique ou non à partir de la clé publique d'accompagnement (108), de l'identificateur de clé de session d'accompagnement (110), et des combinaisons stockées dans la mémoire non volatile (132), est configuré de manière à :
calculer une valeur de hachage de la clé publique d'accompagnement (108) ;
déterminer si la valeur de hachage de la clé publique d'accompagnement (108) correspond ou non à la représentation d'une clé publique (134) de l'une de la pluralité de combinaisons ; et
désigner la charge utile (106) comme étant non authentique en réponse à une détermination selon laquelle la valeur de hachage de la clé publique d'accompagnement (108) ne correspond pas à la représentation d'une clé publique (134) de la pluralité de combinaisons.

12. Système (200) selon la revendication 11, dans lequel le processeur (202), dans le cadre de l'étape consistant à déterminer si la charge utile (106) est authentique ou non à partir de la clé publique d'accompagnement (108), de l'identificateur de clé de session d'accompagnement (110), et des combinaisons stockées dans la mémoire non volatile (132), est configuré de manière à :
pour l'une de la pluralité de combinaisons de représentations de clés publiques (134) et d'identificateurs de clés de session (136) qui présente la représentation de la clé publique (134) qui correspond à la valeur de hachage de la clé publique d'accompagnement (108), déterminer si un numéro d'identificateur de clé de session d'accompagnement (110) correspond ou non à la représentation du numéro d'identificateur de clé de session (136) de ladite une combinaison ;
en réponse à une détermination selon laquelle le numéro d'identificateur de clé de session d'accompagnement (110) correspond à la représentation du numéro d'identificateur de clé de session (136) de la combinaison, désigner la charge utile (106) comme étant authentique ; et
en réponse à une détermination selon laquelle le numéro d'identificateur de clé de session d'accompagnement (110) ne correspond pas à la représentation du numéro d'identificateur de clé de session (136) de ladite une combinaison, désigner la charge utile (106) comme étant non authentique.

13. Système (200) selon la revendication 8, dans lequel :
chaque combinaison de la pluralité de combinaisons de représentations de clés publiques (134) et d'identificateurs de clés de session (136) dans la mémoire non volatile (132) est une valeur de hachage d'une clé publique (108) et d'un identificateur de clé de session (110) ;
le processeur (202), dans le cadre de l'étape consistant à déterminer si la charge utile (106) est authentique ou non à partir de la clé publique d'accompagnement (108), de l'identificateur de clé de session d'accompagnement (110), et des combinaisons stockées dans la mémoire non volatile (132), est configuré de manière à :
calculer une première valeur de hachage de la clé publique d'accompagnement (108) et de l'identificateur de clé de session d'accompagnement (110) ;
déterminer si la première valeur de hachage correspond ou non à l'une des valeurs de hachage dans la mémoire non volatile (132) ; et
désigner la charge utile (106) comme étant non authentique en réponse à une détermination selon laquelle la première valeur de hachage ne correspond à aucune des valeurs de hachage dans la mémoire non volatile (132).
